# EUROPÄISCHE PATENTSCHRIFT

(11) **EP 0 596 259 B1**
(45) Veröffentlichungstag und Bekanntmachung des Hinweises auf die Patenterteilung: **02.01.1997**
(21) Anmeldenummer: 93115947.9
(22) Anmeldetag: 02.10.1993
(51) Int. Cl.: A01B 49/02

(54) **Grubber mit nachgeordneter Hohlscheiben-Krümelwalzen-Einheit**
Cultivator followed by a unit comprising convex discs and rollers
Outil d'ameublissement suivi d'une unité de travail composée de disques bombés et rouleaux

(30) Priorität: 02.11.1992 DE 4236983; 02.11.1992 DE 9214874 U
(43) Veröffentlichungstag der Anmeldung: 11.05.1994
(73) Patentinhaber: Lemken GmbH & Co. KG, 46519 Alpen (DE)
(72) Erfinder: van Laak, Theo, Ing. grad., D-47546 Kalkar (DE)
(74) Vertreter: Schulte, Jörg, Dipl.-Ing.

(56) Entgegenhaltungen:
- EP-A- 0 453 852
- DE-A- 3 541 543
- DE-C- 3 539 070
- DE-U- 7 736 543
- FR-A- 2 409 680

## Beschreibung

Die Erfindung betrifft einen Grubber, dessen Grubberrahmen eine oder mehrere, insbesondere zwei Reihen von mit Flügelscharen ausgerüsteten Zinken trägt und dem eine aus Hohlscheiben und einer Krümelwalze bestehende Einheit nachgeordnet ist, wobei die Einheit über ein Viergelenk, dessen Lenker an einer Basisebene und einer Koppelebene angreifen, parallel zum Grubberrahmen in der Höhe verstellbar und wobei die Einheit über eine Koppel der Koppelebene zugeordnet ist.

Mit derartigen Geräten, die auch als Scheibengrubber bezeichnet werden, wird z. B. für die Stoppelbearbeitung der Boden mittels mit Flügelscharen besetzten Zinken ganzflächig bearbeitet. Die von den Zinken bzw. Flügelscharen hinterlassenen Furchen und Dämme werden durch die nachgeordneten Hohlscheiben egalisiert. Die nachfolgende Krümelwalze sorgt für die notwendige Rückverfestigung und Krümelung des Bodens. Diese Art der Stoppelbearbeitung und der Einarbeitung des Bewuchses sowie des Strohs in den Boden hat sich in den letzten Jahren durchgesetzt und bewährt. Probleme entstehen allerdings bei einem Wechsel der Arbeitstiefe des Gerätes, weil bei einer entsprechenden Änderung der Arbeitstiefe der Zinken die Arbeitstiefe der nachgeordneten Hohlscheiben ebenfalls verändert werden muß. Dabei sind Hohlscheiben und Krümelwalze zu einer Einheit verbunden worden, um diese Einheit entsprechend der Arbeitstiefe der Zinken verändern zu können (EP-A-00 453 852). Hierzu wird die Einheit über horizontale Lenker, die übereinander angeordnet sind mit dem Grubber verbunden, wobei dieser eine vertikale Basisebene und die Einheit - Hohlscheiben mit Krümelwalze - eine vertikale Koppelebene aufweisen. Dieses aus Basis- und Koppelebene sowie Lenkern gebildete Viergelenk kann dabei über ein diagonal angeordnetes Spannschloß in der Lage verändert werden, was zu einer Tiefenänderung der Zinken und der Flügelschare führt. Ein solcher Grubber ist dem Prospekt der Firma ICD Dehondt aus dem Jahre 1992 sowie der EP-A-00 453 852 zu entnehmen. Der dort gezeigte Grubber hat allerdings den Nachteil, daß der Schwerpunkt der nachgeordneten Einheit aus Hohlscheiben und Krümelwalze ungünstig liegt und praktisch nicht zu manipulieren ist. Außerdem ist die gezeigte Ausführung aufwendig zumal eine Anpassung bzw. Veränderung nur bei entsprechender Betätigung der Tiefenverstellvorrichtung zu erreichen ist. Die DE-A-35 39 070 soll einen Wendepacker mit Nachlaufgerät unter Schutz stellen. Der Packer soll mit dem Nachlaufgerät für den Transport aufsattelbar sein.

Der Erfindung liegt daher die Aufgabe zugrunde, einen einfach aufgebauten Scheibengrubber zu schaffen, der einen günstigen und optimal manipulierbaren Schwerpunktabstand der Einheit sicherstellt und der eine Tiefenkorrektur der Hohlscheiben ohne einen wesentliche Beeinflussung der Tiefeneinstellung der Zinken bzw. der Krümelwalze ermöglicht.

Die Aufgabe wird erfindungsgemäß dadurch gelöst, daß die Basisebene und die Koppelebenen annähernd waagerecht angeordnet sind, daß die Hohlscheiben gegenüber der Koppel tiefenverstellbar sind und daß die Lenker - in Arbeitsrichtung gesehen - von oben nach hinten und unten verlaufend angeordnet sind.

Bei einem derart ausgebildeten Grubber ergibt sich automatisch bei größerer Arbeitstiefe ein großer Abstand zwischen Einheit aus Hohlscheiben und Krümelwalze und der hinteren Zinkenreihe, wodurch der nötige Freiraum gewährleistet ist. Bei flacherer Arbeitstiefe dagegen ergibt sich ein entsprechend geringerer Abstand, so daß insgesamt gesehen der gewünschte günstige Schwerpunktabstand der Einheit immer sichergestellt ist. Die Hohlscheiben können ohne Beeinflussung der Krümelwalze und damit der Zinken in der Tiefeneinstellung verändert und den Gegebenheiten angepaßt werden. Eine die Nachstellung der Krümelwalze einerseits und des Grubbers andererseits ist bei der Korrektur der Höheneinstelung der Hohlscheiben nicht notwendig. Über die Anordnung der Lenker ist eine besonders günstige Bewegungsrichtung von Krümelwalze und Hohlscheiben sichergestellt.

Eine zweckmäßige Ausbildung sieht vor, daß die Hohlscheiben in bezug zur Koppel einzeln, gruppenweise und/oder gemeinsam in der Arbeitstiefe einstellbar sind. Damit ist auch eine Kombination verwirklicht worden, die neben der Einzelkorrektur auch eine Gesamtkorrektur ermöglicht.

Nach einer zweckmäßigen Ausbildung der Erfindung ist vorgesehen, daß die die Basisebene und die Koppelebene verbindenden Lenker annähernd parallel zueinander angeordnet sind, wobei sie bei großer Arbeitstiefe der Zinken schräg nach hinten und unten und bei flacher Arbeitstiefe der Zinken mehr vertikal verlaufen. Diese Stellung der Lenker sichert den gewünschten günstigen Schwerpunktabstand der Einheit, da sie die entsprechende Bewegung der Einheit vorgeben.

Denkbar ist es, daß die Lenker konvergierend eingestellt sind, allerdings ist es besonders zweckmäßig, wenn die die Basisebene und die Koppelebene verbindenden Lenker parallel zueinander angeordnet sind. Die Hohlscheiben und die Krümelwalze sind der Koppelebene bzw. der die Koppelebene bildenden Koppel zugeordnet, so daß sie als Einheit, wie weiter vorne geschildert, im Abstand zum Grubber bzw. zu seinen Zinken der Arbeitstiefe entsprechend automatisch verlagert werden können.

Die erwähnte günstige Vorgabe der Bewegungsrichtung der die Koppelebene bildenden Koppel und damit von Krümelwalze und Hohlscheiben wird insbesondere dadurch gewährleistet, daß sie einen Winkel α von 0 bis 60° zur Senkrechten einschließend angeordnet sind.

Eine zweckmäßige Weiterbildung der Erfindung sieht vor, daß der die Basisebene bildende Balken und die die Koppelebene bildende Koppel über ein Stellglied im Abstand zueinander veränderbar sind, wobei das Stellglied vorzugsweise einen Freilauf aufweist, der zwar die Arbeitstiefe fixiert, der jedoch beim Ausheben des Gerätes ein "Nachvorneschwenken" der Einheit aus Hohlscheiben und Krümelwalze zuläßt und damit sicherstellt, daß bei großer Arbeitstiefe dennoch ein günstiger Schwerpunktabstand eingehalten werden kann. wenn der Grubber ausgehoben wird. Über das Stellglied kann die Einheit vorteilhaft in der Arbeitstiefe verändert werden bzw. der Arbeitstiefe der Zinken angepaßt werden. Als Stellglied dient zweckmäßigerweise eine Lochverstelleiste, bei der durch Steckstife zum einen die Arbeitstiefe eingestellt wird und zum anderen das "Nachvorneschwenken" der Einheit Hohlscheiben und Krümelwalze gewährleistet bzw. ermöglicht werden kann.

Eine weitere Anpassung an sich ändernde Arbeitsbedingungen ist erfindungsgemäß dadurch möglich, daß die Hohlscheiben in Längsrichtung verschiebbar mit der Koppel verbunden sind. Dadurch kann der Abstand der Hohlscheiben und der Krümelwalze den Gegebenheiten entsprechend verändert werden.

Weiter kann erfindungsgemäß der Abstand der Einheit zum Grubber bzw. zu den Zinken verändert werden, was dadurch erreicht wird, daß der die Basisebene bildende Balken in Längsrichtung versetzbar mit dem Grubberrahmen verbunden ist. Eine solche Einstellung ist besonders dann vorteilhaft, wenn unterschiedliche Zinkenformen oder Zinken mit Überlastsicherung zum Einsatz kommen sollen.

Zur Verbesserung der Rückverfestigung kann es zweckmäßig sein, der aus Hohlscheiben und Krümelwalze bestehenden Einheit eine zweite Krümelwalze zuzuordnen, wobei die Effektivität dieser zusätzlichen Krümelwalze effektiver gestaltet werden kann, indem ihr oder der ersten Krümelwalze eine Schleppschiene oder ein Egalisierungsbalken zugeordnet ist.

Die Erfindung zeichnet sich insbesondere dadurch aus, daß die der Koppelebene zugeordnete Einheit aus Hohlscheiben und Krümelwalze sich dem Abstand zum Grubber bzw. zu den Zinken der Arbeitstiefe entsprechend einstellen läßt bzw. automatisch in der Position verlagert wird, wenn die Arbeitstiefe der Zinken verändert wird. Dadurch ergibt sich ein größerer Schwerpunktabstand nur dann, wenn diese auch erforderlich ist und dann auch verkraftbar ist, da aufgrund der größeren Arbeitstiefe und dem dadurch bedingten größeren Zugkraftbedarf ohnehin ein größerer Schlepper verwendet wird, der üblicherweise auch schwerer ist und auch eine höhere Hubkraft aufweist. Kleinere PS-schwächere und leichtere Schlepper können mit dem gleichen Gerät ebenfalls problemlos arbeiten, da der bei flacher Arbeitstiefe günstig verlagerte Schwerpunkt den erforderlichen Hubkraftbedarf vorteilhaft reduziert. Insgesamt ist damit ein Scheibengrubber geschaffen, der jeweils einen günstigen Schwerpunktabstand der Einheit aus Hohlscheiben und Krümelwalze zu den Zinken bzw. zum Grubber gewährleistet.

Weitere Einzelheiten und Vorteile des Erfindugnsgegenstandes ergeben sich aus der nachfolgenden Beschreibung der zugehörigen Zeichnungen, in denen bevorzugte Ausführungsbeispiele mit den dazu notwendigen Einzelheiten und Einzelteilen dargestellt sind. Es zeigen:
- Fig. 1: einen solchen Scheibengrubber in Seitenansicht und
- Fig. 2: den Grubber in ausgehobener Stellung.

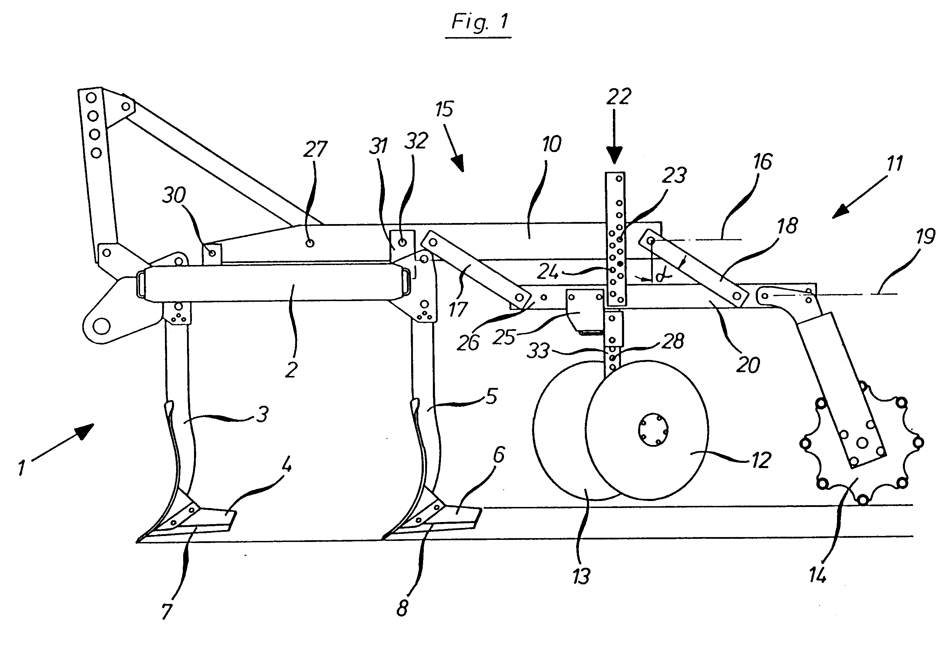

Fig. 1 zeigt einen Grubber 1, der für die Stoppelbearbeitung des Bodens vorgesehen ist. Sein Grubberrahmen 2 ist hierzu mit mehreren Zinken 3, 5 bestückt, die jeweils Flügelschare 4, 6 tragen. Bei der aus Fig. 1 ersichtlichen Ausführung sind zwei Reihen 7, 8 solcher Zinken 3, 5 vorgesehen.

Mit dem Grubberrahmen 2 ist über einen Balken 10 eine Einheit 11 verbunden, die aus Hohlscheiben 12, 13 und einer Krümelwalze 14 besteht. Die Hohlscheiben 12, 13 sind nach vorne in Richtung der zu bearbeitenden Dämme und Rillen einen spitzen Winkel einschließend schräggestellt. Sie sind mit den gewölbten Flächen zueinanderstehend in Fahrtrichtung zueinander versetzt angeordnet, so daß ein Festsetzen von Kluten u. ä. Teilen sicher verhindert ist.

Grubberrahmen 2 und Einheit 11 sind über ein Viergelenk 15 miteinander verbunden, das einmal aus dem erwähnten und die Basisebene 16 bildenden Balken 10, den Lenkern 17, 18 und der die Koppelebene 19 bildenden Koppel 20 besteht. Die Darstellung gemäß Fig. 1 verdeutlicht, daß sich bei einer derartigen Ausbildung, wo die Basisebene 16 und die Koppelebene 19 annähernd waagerecht und parallel zueinander angeordnet sind, der Schwerpunktabstand zwischen Einheit 11 und Zinken 3, 5 sich automatisch einstellt. Bei tiefer eingreifenden Zinken 3, 5 wird der Abstand zwischen der Basisebene 16 und der Koppelebene 19 geringer, so daß sich ein entsprechend größerer Abstand zwischen der Einheit 11 und der letzten Reihe 8 der Zinken 3, 5 ergibt.

Das aus Basisebene 16, Lenkern 17, 18 und Koppelebenen 19 bestehende Viergelenk 15 ist über das Stellglied 22 mit einer Vielzahl von Bohrungen 23, 24 einstellbar, um so die Arbeitstiefe der Zinken 3, 5 jeweils, wenn notwendig, verändern zu können. Unabhängig davon kann beim Ausheben des Grubbers die Einheit 11 nach vorne schwenken, zumindest so weit, bis die Lenker 17, 18 senkrecht stehen, um so einen günstigen Schwerpunktabstand der Grubber vorzugeben.

Das Stellglied 22 ist wie schon erwähnt als Lochleiste mit einer Vielzahl von Bohrungen 23, 24 ausgebildet, wobei diese Bohrungen 23, 24 auch noch versetzt zu einander angeordnet werden können, um so eine sehr feine einstellbare Einheit zu erreichen.

Darüber hinaus kann die Höhenlage der Hohlscheiben 12, 13 und hier insbesondere im Verhältnis zur Krümelwalze 14 vorab eingestellt werden, wozu der Träger mit Bohrungen 28 versehen ist. Zusätzlich ist auch noch eine Verstellung der Hohlscheiben 12, 13 in Längsrichtung der Koppel 20 vorgesehen, wozu die Haltetasche 25 dient, die über in Längsrichtung im Abstand angeordnete Haltebohrungen in verschiedene Positionen mit der Koppel 20 zu verbinden ist. Hierdurch kann vorteilhaft unterschiedlichsten Arbeitsbedingungen Rechnung getragen werden.

Insbesondere, wenn Zinken mit Überlastsicherungen oder Zinken mit anderen Scharformen zum Einsatz kommen sollen, kann der Abstand der Einheit 11 zu den Zinken 3, 5 bzw. der letzten Reihe 8 verändert werden. Hierzu sind am Grubberrahmen 2 Halterungen 30, 31 und im Balken 10 zusätzliche Rahmenbohrungen 27 vorgesehen. Die Rahmenbohrungen 27 sind korrespondierend mit den Halterungen 30, 31 zugeordneten Bohrungen 32 angeordnet. Dadurch ist es möglich, den Balken 10 in seiner Längsrichtung zu verschieben, so daß der Abstand zwischen der Einheit 11 und den Zinken 3, 5 entsprechend verändert wird. Sind an die Rückverfestigung besondere Anforderungen gestellt, so ist es vorteilhaft, der ersten Krümelwalze 14 eine zweite Krümelwalze nachzuordnen, wobei deren Arbeitsweise wiederum optimiert werden kann, indem ihr eine hier nicht dargestellte Schleppschiene nachgeordnet wird.

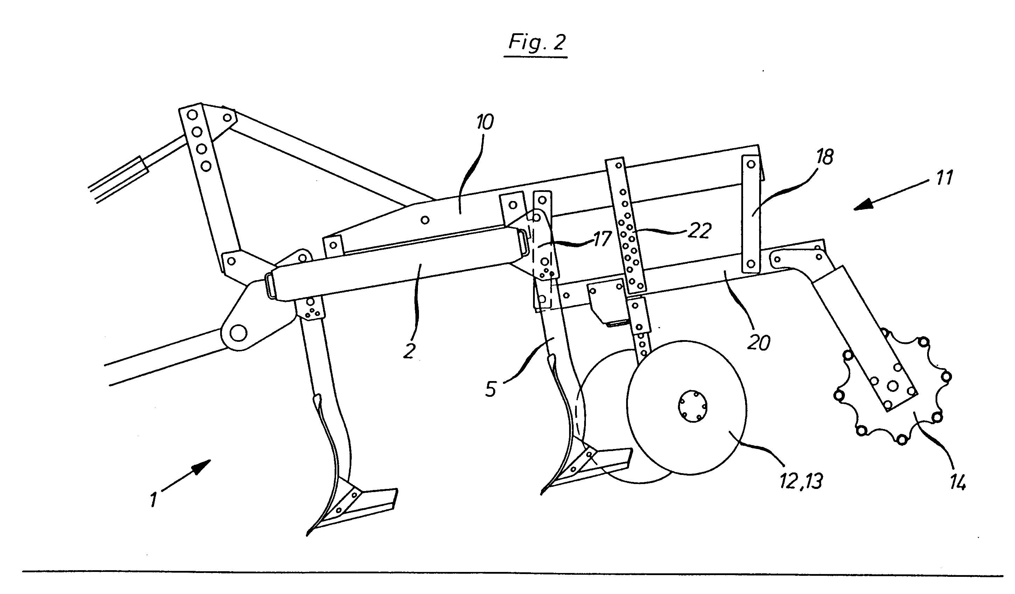

Fig. 2 zeigt den Grubber 1 in Transportstellung bzw. in ausgehobener Stellung. Durch die Anordnung und Ausbildung der Lenker 17, 18 ist die gesamte Einheit 11 um die Anlenkpunkte der Lenker 17, 18 am Balken 10 nach vorne in Richtung auf die hinteren Zinken 5 zugeschwenkt. Dadurch ergibt sich ein günstiger Schwerpunktabstand des Grubbers 1.

Alle genannten Merkmale, auch die den Zeichnungen allein zu entnehmenden, werden allein und in Kombination als erfindungswesentlich angesehen.

## Patentansprüche

1. Grubber, dessen Grubberrahmen (2) eine oder mehrere, insbesondere zwei Reihen von mit Flügelscharen ausgerüsteten Zinken trägt und dem eine aus Hohlscheiben und einer Krümelwalze bestehende Einheit (11) nachgeordnet ist, wobei die Einheit über ein Viergelenk, dessen Lenker (17, 18) an einer Basisebene (16) und einer Koppelebene (19) angreifen, parallel zum Grubberrahmen (2) in der Höhe verstellbar und wobei die Einheit (11) über eine Koppel (20) der Koppelebene (19) zugeordnet ist,
**dadurch gekennzeichnet,**
daß die Basisebene (16) und die Koppelebene (19) annähernd waagerecht angeordnet sind, daß die Hohlscheiben gegenüber der Koppel (20) tiefenverstellbar sind und daß die Lenker (17, 18) - in Arbeitsrichtung gesehen - von oben nach hinten und unten verlaufend angeordnet sind.

2. Grubber nach Anspruch 1,
**dadurch gekennzeichnet,**
daß die Hohlscheiben (12, 13) in bezug zur Koppel (20) einzeln, gruppenweise oder gemeinsam in der Arbeitstiefe einstellbar sind.

3. Grubber nach Anspruch 1,
**dadurch gekennzeichnet,**
daß die die Basisebene (16) und die Koppelebene (19) verbindenden Lenker (17, 18) annähernd parallel zueinander angeordnet sind.

4. Grubber nach Anspruch 1,
**dadurch gekennzeichnet,**
daß die die Basisebene (16) und die Koppelebenen (19) verbindenden Lenker (17, 18) parallel zueinander angeordnet sind.

5. Grubber nach Anspruch 1,
**dadurch gekennzeichnet,**
daß die Lenker (17, 18) einen Winkel α von 0 bis 60° zur Senkrechten einschließend angeordnet sind.

6. Grubber nach Anspruch 1,
**dadurch gekennzeichnet,**
daß der die Basisebene bildende Balken (10) und die die Koppelebene (19) bildende Koppel (20) über ein Stellglied (22) im Abstand zueinander veränderbar sind.

7. Grubber nach Anspruch 1,
**dadurch gekennzeichnet,**
daß die Hohlscheiben (12; 13) in Längsrichtung verschiebbar mit der Koppel (20) verbunden sind.

8. Grubber nach Anspruch 1,
**dadurch gekennzeichnet,**
daß der die Basisebene (16) bildende Balken (10) in Längsrichtung versetzbar mit dem Grubberrahmen (2) verbunden ist.

9. Grubber nach Anspruch 1,
**dadurch gekennzeichnet,**
daß die aus Hohlscheiben (12, 13) und Krümelwalze (14) bestehende Einheit (11) eine zweite Krümelwalze aufweist.

10. Grubber nach Anspruch 1 oder Anspruch 9,
**dadurch gekennzeichnet,**
daß der Krümelwalze (14) oder zweiten Krümelwalze eine Schleppschiene oder ein Egalisierungsbalken zugeordnet ist.

## Claims

1. Cultivator, the frame (2) of which bears one or more, in particular two, rows of tines fitted with wing blades and behind which a unit (11) comprising hollow discs and a roller tiller, said unit being adjustable in height parallel to the cultivator frame (2) via a four-bar mechanism, the guide bars (17, 18) of which engage on a base plane (16) and a coupling plane (19), and said unit (11) being allocated to the coupling plane (19) via a coupler (20), characterised in that the base plane (16) and the coupling plane (19) are arranged approximately horizontally; that the hollow discs are adjustable in depth relative to the coupler (20); and that the guide bars (17, 18) are arranged to extend downwards towards the back from above - as viewed in working direction.

2. Cultivator according to Claim 1, characterised in that the hollow discs (12, 13) are adjustable in working depth relative to the coupler (20), either individually, in groups or jointly.

3. Cultivator according to Claim 1, characterised in that the guide bars (17, 18) connecting the base plane (16) and the coupling plane (19) are arranged approximately parallel to one another.

4. Cultivator according to Claim 1, characterised in that the guide bars (17, 18) connecting the base plane (16) and the coupling plane (19) are arranged parallel to one another.

5. Cultivator according to Claim 1, characterised in that the guide bars (17, 18) are arranged to enclose an angle α of 0° to 60° to the vertical.

6. Cultivator according to Claim 1, characterised in that the distance between the beam (10) forming the base plane and the coupler (20) forming the coupling plane (19) may be varied via a control member (22).

7. Cultivator according to Claim 1, characterised in that the hollow discs (12; 13) are connected to the coupler (20) so as to slide in the longitudinal direction.

8. Cultivator according to Claim 1, characterised in that the beam (10) forming the base plane (16) is connected to the cultivator frame (2) so as to be displaced in the longitudinal direction.

9. Cultivator according to Claim 1, characterised in that the unit (11) comprising hollow discs (12, 13) and roller tiller (14) has a second roller tiller.

10. Cultivator according to Claim 1 or Claim 9, characterised in that a drag rail or levelling beam is allocated to the roller tiller (14) or second roller tiller.

## Revendications

1. Cultivateur, dont le châssis (2) porte une ou plusieurs, en particulier deux, rangées de dents pourvues de socs à ailettes, et auquel fait suite une unité (11) constituée de disques à double enveloppe et d'un rouleau émotteur, l'unité, grâce à la présence d'une articulation à quatre points, dont les bras (17, 18) sont appliqués à un plan de base (16) et à un plan de couplage (19), pouvant être réglée en hauteur, parallèlement au châssis (2) du cultivateur, et l'unité (11) étant associée au plan de couplage (19) par l'intermédiaire d'une bielle (20), caractérisé en ce que le plan de base (16) et le plan de couplage (19) sont approximativement horizontaux, en ce que les disques à double enveloppe peuvent être réglés en profondeur par rapport à la bielle (20), et en ce que les bras (17, 18) - vu dans la direction de travail - sont disposés pour s'étendre du haut vers l'arrière et le bas.

2. Cultivateur selon la revendication 1, caractérisé en ce que la profondeur de travail des disques à double enveloppe (12, 13) peut être réglée, par rapport à la bielle (20), de façon isolée, groupée ou collective.

3. Cultivateur selon la revendication 1, caractérisé en ce que les bras (17, 18) qui relient le plan de base (16) et le plan de couplage (19) sont approximativement parallèles l'un par rapport à l'autre.

4. Cultivateur selon la revendication 1, caractérisé en ce que les bras (17, 18) qui relient le plan de base (16) et le plan de couplage (19) sont parallèles l'un par rapport à l'autre.

5. Cultivateur selon la revendication 1, caractérisé en ce que les bras (17, 18) forment un angle α compris entre 0 et 60° par rapport à la verticale.

6. Cultivateur selon la revendication 1, caractérisé en ce que l'écart entre la barre (10) constituant le plan de base et la bielle (20) constituant le plan de couplage (19) peut être modifié au moyen d'un organe de réglage (22).

7. Cultivateur selon la revendication 1, caractérisé en ce que les disques à double enveloppe (12 ; 13) sont reliés à la bielle (20) de façon à pouvoir les déplacer dans le sens de la longueur.

8. Cultivateur selon la revendication 1, caractérisé en ce que la barre (10) constituant le plan de base (16) est reliée au châssis (2) du cultivateur de façon à pouvoir la déplacer dans le sens de la longueur.

9. Cultivateur selon la revendication 1, caractérisé en ce que l'unité (11) constituée des disques à double enveloppe (12, 13) et du rouleau émotteur (14) comprend un deuxième rouleau émotteur.

10. Cultivateur selon la revendication 1 ou la revendication 9, caractérisé en ce qu'une barre de remorque ou une barre égalisatrice est associée au rouleau émotteur (14) ou au deuxième rouleau émotteur.
